# EUROPÄISCHE PATENTSCHRIFT

(11) **EP 0 478 936 B1**
(45) Veröffentlichungstag und Bekanntmachung des Hinweises auf die Patenterteilung: **04.01.1995**
(21) Anmeldenummer: 91113733.9
(22) Anmeldetag: 16.08.1991
(51) Int. Cl.: B60J 7/12, F16F 7/10, B62D 31/00

(54) **Vorrichtung zur Dämpfung von Torsionsschwingungen**
Torsional vibration damper arrangement
Dispositif amortisseur de vibration de torsion

(30) Priorität: 01.10.1990 DE 4030990
(43) Veröffentlichungstag der Anmeldung: 08.04.1992
(73) Patentinhaber: Dr.Ing.h.c. F. Porsche Aktiengesellschaft, 70435 Stuttgart (DE)
(72) Erfinder: Kohlmeier, Hans-Heinrich, W-7251 Mönsheim (DE); Liefooghe, Christophe, B-2470 Hone/Belgien (BE); Joest, Rainer, W-7130 Mühlacker (DE); Bayer, Heinz, W-7900 Ulm (DE); Burst, Hermann, W-7255 Rutesheim (DE)

(56) Entgegenhaltungen:
- EP-A- 0 347 545
- DE-U- 8 613 033
- PATENT ABSTRACTS OF JAPAN vol. 12, no. 292 (M-729)(3139) 10. August 1988 & JP-A-63 067 440

## Beschreibung

Die Erfindung bezieht sich auf eine Vorrichtung zur Dämpfung von Torsionsschwingungen.

Bei Fahrzeugen in Cabriolet-Bauweise treten aufgrund der Struktur und somit der geringeren Torsionssteifigkeit gegenüber Coupés Torsionseigenschwingungen auf, die insbesondere im Bereich der Windschutzscheibe derartige Vibrationen bzw. Schwingungsausschläge verursachen, daß der an der Windschutzscheibe befestigte Rückblickspiegel solche Schwingungen ausführt, daß ein Rückblick durch den Spiegel erschwert wird.

Schwingungstilger sind für die verschiedenen Anwendungsbereiche im Fahrzeugbau, wie z.B. an der Antriebswelle (DE-A-36 32 418) und an Antriebseinheiten (DE-C-31 25 830) bekannt. Diese Tilger sind in elastischen Buchsen gehalten, welche aufgrund der Platzverhältnisse einen zur optimalen Schwingungsdämpfung entsprechenden Bauraum einnehmen können.

Aufgabe der Erfindung ist es, einen Schwingungstilger in einem Cabriolet-Fahrzeug zu schaffen, der eine optimal abgestimmte Tilgung von Schwingungen auf Torsionseigenfrequenzen des Fahrzeugs gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß die Schwingungen am Rahmen der Windschutzscheibe über einen metallischen Massetilger soweit abgebaut werden können, daß ein ungehinderter Rückblick durch den an der Windschutzscheibe oder am Rahmen befestigten Spiegel ermöglicht wird. Darüber hinaus wird auch das übrige Schwingungsverhalten, insbesondere im Armaturenbereich mit Lenkrad, deutlich verbessert.

Der Tilger ist je nach Bauart des Fahrzeugs bzw. des Windschutzscheibenrahmens innerhalb dieses Rahmens zwischen verbundenen Profilstreben oder außerhalb des Rahmens elastisch über Lager gehalten. Der Tilger ist am oberen Rahmen der Windschutzscheibe befestigt und aufgrund der sehr beengten Platzverhältnisse sind zur optimalen Dämpfung der Schwingungen elastische Schublager mit einer Höhe erforderlich, die in etwa der Höhe des Tilgers bzw. der lichten Höhe der verbundenen Profilstreben entspricht.

Die elastischen Lager sind vorzugsweise an den beiden freien Enden der Tilgermasse angeordnet und mit ihrem einen unteren Ende an einer Profilstrebe und mit ihrem anderen oberen Ende mit der Masse des Tilgers verbunden, so daß eine optimale Länge des Elastomer-Körpers erzielbar ist. Durch diese Anordnung des Lagers wird in vorteilhafter Weise ein statisch auf Druck beanspruchtes Lager erzielt, was sich in Bezug auf Dauerfestigkeit zur Dämpfung von Torsionseigenfrequenzen im Bereich des Windschutzscheibenrahmens günstig auswirkt.

Die Tilgermasse kann am freien Ende auch von einem Halter umgriffen sein, dessen einer vorragender Schenkel mit dem Elastomer-Körper des Lagers verbunden ist und der mit einer Konsole verbunden ist, die seitliche Längs- und stirnseitige Queranschläge aufweist.

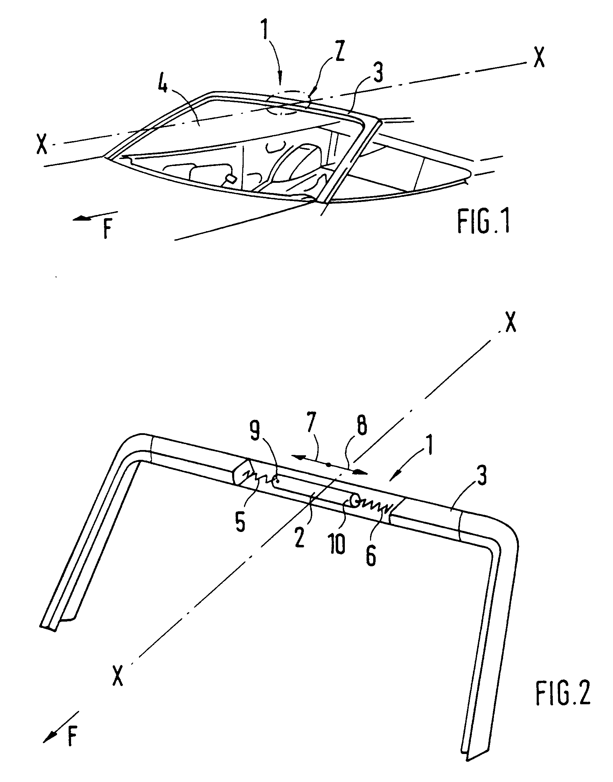

Ausführungsbeispiele der Erfindung sind in den Zeichnungen dargestellt und werden im folgenden näher beschrieben.
Es zeigen
- Fig. 1: eine schematische Darstellung eines Einbauortes des Schwingungstilgers,
- Fig. 2: eine vergrößerte Darstellung Z aus Fig. 1 des Schwingungstilgers im oberen Scheibenrahmen,
- Fig. 3: eine Anordnung des Schwingungstilgers im oberen Scheibenrahmen mit einem endseitigen elastischen Lager, wobei nur die eine Hälfte des Tilgers gezeigt ist,
- Fig. 4: eine Einzelheit der Konsole für den Elastomer-Körper in schaubildlicher Darstellung,
- Fig. 5: einen Querschnitt durch den oberen Scheibenrahmen einer Windschutzscheibe mit zwischen zwei Profil streben eingekapseltem Tilger, und
- Fig. 6: einen Querschnitt durch den oberen Scheibenrahmen einer Windschutzscheibe mit einem aufgesetzten Tilger, der unterseitig über eine Blende abgedeckt ist.

Die Vorrichtung 1 zur Dämpfung von Torsionsschwingungen umfasst im wesentlichen einen Tilger 2 am oberen Scheibenrahmen 3 bzw. am Dachrahmen einer Windschutzscheibe 4, welcher in elastischen Lagern 5 und 6 in Pfeilrichtungen 7 und 8 annähernd horizontal schwingend bewegbar angeordnet ist. Der Tilger 2 besteht aus einem metallischen Werkstoff mit einer möglichst großen spezifischen Wichte, wie z.B. Stahl, Blei oder dergleichen Werkstoff und ist endseitig, d.h. an seinen freien Enden 9 und 10 in den elastischen Lagern 5 und 6 gehalten. Es können auch mehr als zwei Lager zur Befestigung des Tilgers 2 vorgesehen sein, so können diese Lager z.B. über die Länge des Tilgers verteilt angeordnet werden.

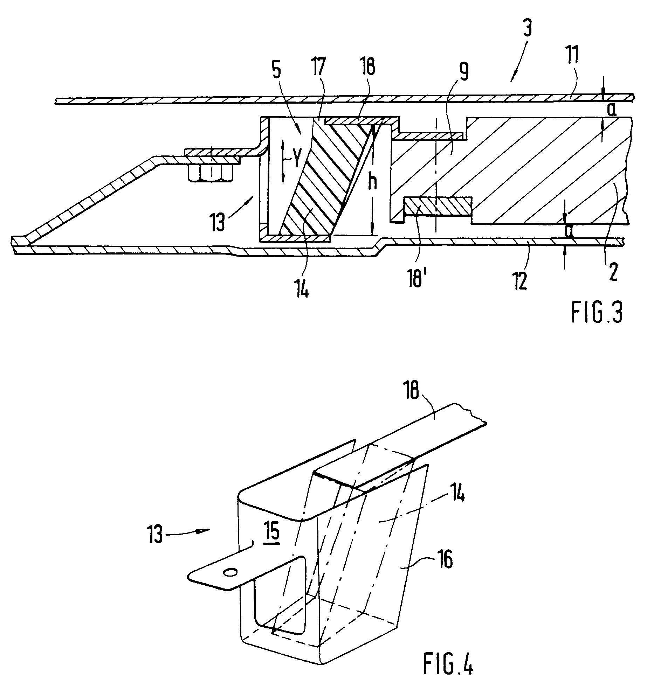

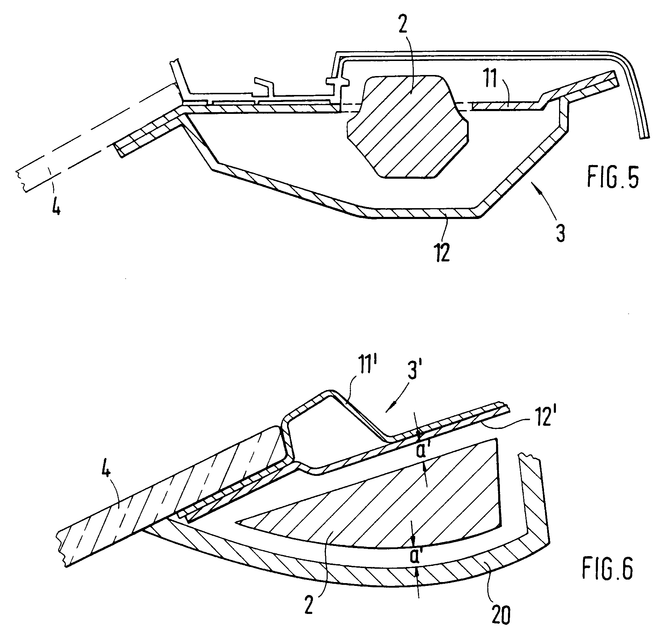

Der Tilger 2 ist symmetrisch zur Mittellängsachse X-X des Fahrzeugs innerhalb des Rahmens 3 oder außerhalb des Rahmens 3' angeordnet. Der Einbauort des Tilgers 2 ist abhängig von der Bauart des Rahmens, d.h. wenn der Platz zur Unterbringung des Tilgers 2 mit den elastischen Lagern 5 und 6 zwischen den Profil streben 11 und 12 des Rahmens 3 ausreichend ist, wird eine innere Anordnung vorgesehen, wie Fig. 3 und 5 näher zeigen. Dagegen wird eine außenliegende Anordnung des Tilgers 2 vorgenommen, wenn kein Platz zwischen den Profil streben 11', 12' vorhanden ist, wie die Ausführung gemäß Fig. 6 zeigt. Bei diesem Tilger 2 ist eine mittige Lagerung über ein Schublager gemäß Fig. 3 vorgesehen. An den freien Enden des Tilgers sind in einer horizontalen Ebene ausgerichtete Lager angeordnet, die in Längsrichtung (Fahrtrichtung F) eine größere Steifigkeit als in Querrichtung aufweisen.

Die Lager 5 und 6 des Tilgers 2 sind als elastische Schublager ausgeführt und statisch auf Druck beansprucht. Sie weisen eine zur optimalen Dämpfung der Torsionseigenfrequenzen des Fahrzeugs und zur Gewährleistung der Dauerhaltbarkeit bestimmte Höhe auf, welche in etwa der lichten Höhe zwischen den Profilstreben 11 und 12 des Windschutzscheibenrahmens 3 entspricht.

Wie in den Fig. 3 und 4 näher gezeigt, ist zur Aufnahme und Festlegung der Lager 5 und 6 eine Konsole 13 vorgesehen, die den Elastomer-Körper 14 der Lager 5 und 6 quasi umschließt und deren Stirnwand 15 einen Queranschlag und deren beide Seitenwände 16 Längsanschläge bilden. Mit dem Tilger 2 ist der Elastomer-Körper an seinem der Befestigung an der Konsole 13 gegenüberliegenden Ende 17 über einen vorragenden Halter 18 befestigt, der über einen weiteren Halter 18' das freie Ende 9 des Tilgers 2 zwischen sich haltend aufnimmt.

Der Tilger 2 soll die sich am oberen Rahmen 3 als Schwingung in Querrichtung des Fahrzeugs auswirkende Torsionseigenfrequenz des Cabriolet-Fahrzeugs dämpfen, wozu die Tilgermasse zum einen in definiert elastischen Lagern 5 und 6 gehalten ist und zum anderen zwischen den Profilstreben 11 und 12 bzw. 11', 12' jeweils ein Freiraum mit Abstand a vorhanden ist, so daß ein nachteiliges Anstoßen an den Profilstreben unterbunden wird. Insbesondere weisen die Lager in Querrichtung eine weichere Kennung als in Hochrichtung Y auf. Eine Bewegung des Tilgers in Querrichtung (Pfeilrichtung 7, 8)kann bis zu 20 mm Differenz zum Ruhezustand ausmachen.

Bei einer außenliegenden Anordnung des Tilgers 2 gemäß Fig. 6 wird dieser über eine zusätzliche Blende abgedeckt, die gleichzeitig als Fangvorrichtung für den Tilger 2 dient.

Vorzugsweise ist der Tilger 2 einteilig ausgebildet und dem Konturenverlauf des Rahmens 3, 3' angepasst, d.h., der Tilger 2 ist dem Verlauf des Rahmens 3, 3' angepasst, so daß ein Freiliegen sichergestellt ist.

## Patentansprüche

1. Vorrichtung zur Dämpfung von aufbauseitigen Torsionsschwingungen an einem Cabriolet-Fahrzeug, **dadurch gekennzeichnet**, daß ein Tilger (2) an einem Rahmen (3; 3') einer Windschutzscheibe (4) über Schublager (5, 6) elastisch gehalten und mit Abstand (a, a') zum Rahmen (3; 3') in Querrichtung (7, 8)des Fahrzeugs relativ frei schwingend angeordnet ist und die Lager (5, 6) jeweils eine die Torsionseigenfrequenz des Fahrzeugs im Bereich des Rahmens (3; 3') dämpfende maximale Höhe (h) aufweisen.

2. Vorrichtung nach Anspruch 1, **dadurch gekennzeichnet**, daß der Tilger (2) einen einteiligen metallischen Massekörper umfasst, der über mindestens jeweils ein an seinem freien Ende (9, 10) angeordnetes Lager (5, 6) elastisch abgestützt wird.

3. Vorrichtung nach den Ansprüchen 1 oder 2, **dadurch gekennzeichnet**, daß der Massekörper des Tilgers (2) aus Blei besteht.

4. Vorrichtung nach einem oder mehreren der vorhergehenden Ansprüche, **dadurch gekennzeichnet**, daß die Schublager (5, 6) des Tilgers (2) in Querrichtung (7, 8) eine weichere Kennung aufweisen als in Hochrichtung (y).

5. Vorrichtung nach einem oder mehreren der vorhergehenden Ansprüche, **dadurch gekennzeichnet**, daß der Tilger (2) innerhalb eines aus zwei Profilstreben (11, 12) zusammengesetzten Windschutzscheibenrahmens (3) elastisch gelagert angeordnet ist und die Streben des Rahmens (3) den Tilger (2) kapselnd umschließen.

6. Vorrichtung nach einem oder mehreren der vorhergehenden Ansprüche, **dadurch gekennzeichnet**, daß der Tilger (2) außerhalb des aus zwei Profil streben (11', 12') zusammengesetzten Windschutzscheibenrahmens (3) angeordnet ist und von einer Blende (20) zum Fahrzeuginnenraum hin abgedeckt wird.

7. Vorrichtung nach Anspruch 1 und einem oder mehreren der vorhergehenden Unteransprüche, **dadurch gekennzeichnet**, daß der Tilger (2) am oberen sich annähernd in einer horizontalen Ebene sich erstreckenden Rahmen (3; 3') der Windschutzscheibe (4) symmetrisch zur Fahrzeuglängsmittelachse (X-X) angeordnet ist.

8. Vorrichtung nach einem oder mehreren der vorhergehenden Ansprüche, **dadurch gekennzeichnet**, daß die freien Enden (9 und 10) des Tilgers (2) von Haltern (18, 18') umgriffen sind, wobei der eine Halter (18) mit dem Elastomer-Körper (14) verbunden und in einer an einer Profilstrebe befestigten Konsole (13) angeordnet ist.

9. Vorrichtung nach Anspruch 8, **dadurch gekennzeichnet**, daß die Konsole (13) eine als Queranschlag ausgebildete Rückwand (15) sowie als Längsanschläge ausgebildete Seitenwände (16) für das elastische Lager (5 und 6) aufweist.

10. Vorrichtung nach einem oder mehreren der vorhergehenden Ansprüche, **dadurch gekennzeichnet**, daß der Tilger (2) eine dem Verlauf des Rahmens (3; 3') entsprechend bogenförmige Form aufweist.

11. Vorrichtung nach einem oder mehreren der vorhergehenden Ansprüche, **dadurch gekennzeichnet**, daß der Tilger (2) über ein mittig angeordnetes Schublager (5) und an den freien Enden über weitere Schublager gehalten ist, die in einer horizontalen Ebene in Längsrichtung des Fahrzeugs ausgerichtet sind und in Längsrichtung (Fahrtrichtung F) eine größere Steifigkeit aufweisen als in Querrichtung.

## Claims

1. A device for damping the torsional vibrations in the body of a convertible, **characterised in that** a damper (2) is held resiliently at a frame (3; 3') of a windscreen (4) via thrust bearings (5,6) and is arranged so as to oscillate relatively freely in the transverse direction (7,8) of the car at a distance (a, a') from the frame (3; 3'), and the bearings (5, 6) each have a maximum height (h) damping the torsional natural frequency of the vehicle in the area of the frame (3; 3').

2. A device according to Claim 1, **characterised in that** the damper (2) comprises a one-piece metallic material structure supported resiliently via at least one bearing (5, 6) arranged at its free end (9, 10).

3. A device according to Claim 1 or 2, **characterised in that** the material structure of the damper (2) consists of lead.

4. A device according to one or more of the preceding claims, **characterised in that** the thrust bearings (5,6) of the damper (2) have a weaker characteristic in the transverse direction (7, 8) than in the vertical direction.

5. A device according to one or more of the preceding Claims, **characterised in that** the damper (2) is mounted resiliently within one windscreen frame (3) comprising two streamlined-section struts (11, 12), and the struts of the frame (3) encapsulate the damper (2).

6. A device according to one or more of the preceding Claims, **characterised in that** the damper (2) is arranged outside the windscreen frame (3) comprising two streamlined-section struts (11', 12'), and is covered by a shield (20) from the vehicle interior.

7. A device according to Claim 1 and one or more of the preceding subclaims, **characterised in that** the damper (2) is placed symmetrically to the longitudinal central axis of the vehicle (X-X) on the upper part of the frame (3; 3') of the windscreen (4) extending approximately in a horizontal plane.

8. A device according to one or more of the preceding Claims, **characterised in that** the free ends (9 and 10) of the damper (2) are gripped by holders (18, 18'), wherein one holder (18) is connected to a elastomer structure (14) and is arranged in a bracket (13) fastened to a streamlined-section strut.

9. A device according to Claim 8, **characterised in that** the bracket (13) has a back wall (15) in the form of a transverse stop and side walls (16) in the form of longitudinal stops for the resilient bearing (5 and 6).

10. A device according to one or more of the preceding Claims, **characterised in that** the damper (2) has a curved shape corresponding to the shape of the frame (3; 3')

11. A device according to one or more of the preceding Claims, **characterised in that** the damper (2) is held via a centrally positioned thrust bearing (5) and at the free ends via further thrust bearings aligned in a horizontal plane in the longitudinal direction of the vehicle and have a greater degree of rigidity in the longitudinal (direction of travel F) than in the transverse direction.

## Revendications

1. Dispositif pour amortir les oscillations de torsion de la carrosserie d'un cabriolet, caractérisé en ce qu'un absorbeur (2) est monté de façon à pouvoir osciller relativement librement en étant maintenu élastiquement sur un cadre (3; 3') d'un pare-brise (4) au moyen de supports de butée (5, 6) et avec un écart (a, a') par rapport au cadre (3, 3') en direction transversale (7, 8) du véhicule, et les supports (5, 6) présentent respectivement une hauteur maximale (h) d'amortissement de la fréquence propre de torsion du véhicule dans la région du cadre (3; 3').

2. Dispositif sel on la revendication 1, caractérisé en ce que l'absorbeur (2) comprend un corps constitué par une masse métallique d'un seul tenant, et est supporté élastiquement par au moins un support (5, 6) disposé à son extrémité libre (9, 10) respectivement.

3. Dispositif sel on la revendication 1 ou 2, caractérisé en ce que la masse du corps de l'absorbeur (2) est constituée en plomb.

4. Dispositif selon l'une ou plusieurs des revendications précédentes, caractérisé en ce que les supports de butée (5, 6) de l'absorbeur (2) présentent une caractéristique plus molle en direction transversale (7, 8) qu'en direction (Y) de la hauteur.

5. Dispositif selon l'une ou plusieurs des revendications précédentes, caractérisé en ce que l'absorbeur (2) est monté élastiquement à l'intérieur d'un cadre de pare-brise (3) constitué par deux bandes profilées (11, 12) et en ce que les bandes du cadre (3) entourent l'absorbeur (2) en l'encapsulant.

6. Dispositif selon l'une ou plusieurs des revendications précédentes, caractérisé en ce que l'absorbeur (2) est monté élastiquement à l'extérieur d'un cadre (3) de pare-brise constitué par deux bandes profilées (11', 12') et est recouvert par un panneau (20) sur le côté tourné vers l'intérieur du véhicule.

7. Dispositif sel on la revendication 1 et une ou plusieurs des revendications précédentes, caractérisé en ce que l'absorbeur (2) est monté sur le cadre supérieur (3, 3') du pare-brise (4) qui s'étend approximativement dans un plan horizontal et symétriquement par rapport à l'axe longitudinal central (X-X) du véhicule.

8. Dispositif sel on l'une ou plusieurs des revendications précédentes caractérisé en ce que les extrémités libres (9 et 10) de l'absorbeur (2) sont entourées par des éléments de retenue (18, 18'), un élément de retenue (18) étant relié au corps en élastomère (14) et disposé dans une console (13) fixée à l'une des bandes profilées.

9. Dispositif selon la revendication 8, caractérisé en ce que la console (13) comprend une paroi arrière (15) constituée sous forme d'une surface de butée transversale ainsi que des parois latérales (16) formant des surfaces de butée longitudinales pour les supports élastiques (5 et 6).

10. Dispositif selon l'une ou plusieurs des revendications précédentes, caractérisé en ce que l'absorbeur (2) présente une forme courbe qui correspond à la forme du cadre (3, 3').

11. Dispositif selon l'une ou plusieurs des revendications précédentes, caractérisé en ce que l'absorbeur (2) est maintenu par un support de butée (5) disposé centralement et par d'autres supports de butée disposés à ses extrémités libres, qui sont orientés dans un plan horizontal en direction longitudinale du véhicule et présentent en direction longitudinale (direction F de la marche) une rigidité plus élevée qu'en direction transversale.
